# EUROPEAN PATENT APPLICATION

(11) **EP 4 350 516 A1**
(43) Date of publication of application: **10.04.2024**
(21) Application number: 22831313.6
(22) Date of filing: 01.04.2022
(51) Int. Cl.: G06F 9/455

(54) **CONTROL METHOD AND ELECTRONIC DEVICE**

(30) Priority: 29.06.2021 CN 202110729247
(71) Applicant: Huawei Technologies Co., Ltd., Longgang Shenzhen, Guangdong 518129 (CN)
(72) Inventor: WANG, Feng, Shenzhen, Guangdong 518129 (CN)
(74) Representative: Pfenning, Meinig & Partner mbB
(86) International application number: PCT/CN2022/084893
(87) International publication number: WO 2023/273482

(57) **Abstract**

This application relates to the field of computer control technologies and provides a control method and an electronic device. According to this solution, in a running process of a virtual machine in a simulator, when a download directory that is set in an application market of the electronic device is changed, the simulator may reconstruct a virtual device based on a new download directory, and the virtual machine in the simulator may be mounted to a reconstructed virtual device, so that the virtual machine in the simulator may directly access an installation package in the new download directory and install the installation package in the new download directory. In this way, a shared path between a host machine and the virtual machine is modified in real time in a running process of the virtual machine without a need of restarting the virtual machine, so that an application that is currently used and that is in the virtual machine does not need to be closed, and the application currently used in the virtual machine is not affected.

## Description

This application claims priority to Chinese Patent Application No. 202110729247.7, filed with the China National Intellectual Property Administration on June 29, 2021 and entitled "CONTROL METHOD AND ELECTRONIC DEVICE", which is incorporated herein by reference in its entirety.

### TECHNICAL FIELD

This application relates to the field of computer technologies, and in particular, to a control method and an electronic device.

### BACKGROUND

With further integration of a personal computer (personal computer, PC) and a mobile phone, an application (application, APP) of an Android (Android) system in a mobile phone product can be gradually used in a system (such as a Windows system or an iOS system) of a PC product by using a virtualization technology of a simulator, so that a user can use the Android APP on the PC product by using the simulator. The simulator is software that can run on a PC and simulate an Android system, and can simulate a running environment of the Android system on the PC, so that a user can experience a game and an application of Android on the PC.

Currently, for a simulator, file sharing between a host machine (that is, a system on a PC product) and a virtual machine (that is, an Android system) is an extremely important basic capability. Currently, most simulators implement file sharing by virtualizing a host file directory into a device and mounting the device to a virtual machine. However, the method has an obvious disadvantage. In a running process of the virtual machine, a shared path between the host machine and the virtual machine cannot be changed. In addition, if the shared path needs to be changed, the virtual machine needs to be restarted, and consequently, an application that is running in the virtual machine is closed and is affected. Therefore, how to modify a shared path between a host machine and a virtual machine in real time in a running process of the virtual machine without a need of restarting the virtual machine is a technical problem that needs to be urgently resolved currently.

### SUMMARY

This application provides a control method and an electronic device, so that a shared path between a host machine and a virtual machine can be modified in real time in a running process of the virtual machine without a need of restarting the virtual machine, improving user experience.

According to a first aspect, this application provides a control method, applied to a simulator. The simulator is configured to be installed on an electronic device, the electronic device includes a first operating system, and the simulator includes a second operating system; and the method includes: in response to a received first message sent by a first client in the electronic device, determining whether a first storage path is the same as a second storage path, where the first message indicates to install a first application, and the first storage path is a storage path of an installation package of the first application; when the first storage path is different from the second storage path, constructing a first virtual device based on the first storage path; and sending a second message to the second operating system, where the second message indicates the second operating system to be mounted to the first virtual device.

In this way, in a running process of a virtual machine in the simulator, when a download directory that is set in a client (for example, an application market) of the electronic device is changed, the simulator may reconstruct a virtual device based on a new download directory, and the virtual machine in the simulator may be mounted to a reconstructed virtual device, so that the virtual machine (that is, the second operating system) in the simulator may directly access an installation package in the new download directory and install the installation package in the new download directory. In this way, a shared path between the host machine and the virtual machine is modified in real time in the running process of the virtual machine without a need of restarting the virtual machine, so that an application that is currently used and that is in the virtual machine does not need to be closed, and the application currently used in the virtual machine is not affected.

In a possible implementation, the second message further indicates the second operating system to install the first application.

In a possible implementation, the method further includes: sending a fourth message to the second operating system in response to a received third message sent by the second operating system, where the third message indicates that mounting is successful, and the fourth message indicates the second operating system to install the first application. Therefore, after the second operating system is successfully mounted to the first virtual device, the second operating system is indicated to install the first application.

In a possible implementation, the first message includes one or more of the following: a name of the first application, the first storage path, or information about whether the second storage path is modified.

In a possible implementation, the second message includes a mounting manner and a mounting parameter.

In a possible implementation, the mounting manner includes direct mounting or first unmounting and then mounting.

In a possible implementation, the mounting parameter includes one or more of the following: a name of the first virtual device, a directory mounted to the second operating system, or a type of a specified file system.

In a possible implementation, before the constructing a first virtual device based on the first storage path, the method further includes: destroying a second virtual device, where the second virtual device is constructed based on the second storage path.

In a possible implementation, the first client is a client having an application providing function, or the first client is a client having an application migration function.

In a possible implementation, the first operating system is a Windows operating system, the second operating system is an Android operating system, and the first application is an Android application.

In a possible implementation, the first virtual device is used by the second operating system to access the first storage path.

In a possible implementation, the second storage path is a storage path of a second application, and the second application is a previously installed application.

According to a second aspect, this application provides a control method, applied to an electronic device. The electronic device includes a first operating system, a simulator is installed on the electronic device, and the simulator includes a second operating system; and the method includes: in response to an installation operation performed by a user for a first application on a first client in the electronic device, determining whether a first storage path is the same as a second storage path, where the first storage path is a storage path of an installation package of the first application; when the first storage path is different from the second storage path, constructing a first virtual device based on the first storage path, and mounting the second operating system to the first virtual device; and installing the first application, and displaying the first application.

In this way, in a running process of a virtual machine in the simulator, when a download directory that is set in a client (for example, an application market) of the electronic device is changed, the simulator may reconstruct a virtual device based on a new download directory, and the virtual machine in the simulator may be mounted to a reconstructed virtual device, so that the virtual machine (that is, the second operating system) in the simulator may directly access an installation package in the new download directory and install the installation package in the new download directory. In this way, a shared path between the host machine and the virtual machine is modified in real time in the running process of the virtual machine without a need of restarting the virtual machine, so that an application that is currently used and that is in the virtual machine does not need to be closed, and the application currently used in the virtual machine is not affected.

In a possible implementation, the first client is a client having an application providing function, or the first client is a client having an application migration function.

In a possible implementation, the first operating system is a Windows operating system, the second operating system is an Android operating system, and the first application is an Android application.

In a possible implementation, the first virtual device is used by the second operating system to access the first storage path.

In a possible implementation, before the constructing a first virtual device based on the first storage path, the method further includes:
destroying a second virtual device, where the second virtual device is constructed based on the second storage path.

In a possible implementation, the second storage path is a storage path of a second application, and the second application is a previously installed application.

According to a third aspect, this application provides a control apparatus. The apparatus includes units configured to perform the method according to the first aspect. The apparatus may correspondingly perform the method described in the first aspect. For related descriptions of the unit in the apparatus, refer to the descriptions of the first aspect. For brevity, details are not described herein again. For example, the control apparatus may be a simulator.

The method according to the first aspect may be implemented by hardware, or may be implemented by hardware executing corresponding software. The hardware or the software includes one or more modules or units corresponding to the foregoing functions, for example, a processing module or unit and a display module or unit.

According to a fourth aspect, this application provides an electronic device. The electronic device includes a processor, and the processor is coupled to a memory. The memory is configured to store a computer program or instructions. The processor is configured to execute the computer program or the instructions stored in the memory, so that the method according to the first aspect or the second aspect is performed.

For example, the processor is configured to execute the computer program or the instructions stored in the memory, so that the electronic device is enabled to perform the method according to the first aspect.

According to a fifth aspect, this application provides a computer-readable storage medium. The computer-readable storage medium stores a computer program (which may also be referred to as instructions or code) used to implement the method according to the first aspect or the second aspect.

For example, when the computer program is run by a computer, the computer is enabled to perform the method according to the first aspect or the second aspect.

According to a sixth aspect, this application provides a chip, including a processor. The processor is configured to read and execute the computer program stored in the memory, to perform the method according to the first aspect or the second aspect.

Optionally, the chip further includes a memory, and the memory is connected to the processor by using a circuit or a wire.

According to a seventh aspect, this application provides a chip system, including a processor. The processor is configured to read and execute the computer program stored in the memory, to perform the method according to the first aspect or the second aspect.

Optionally, the chip system further includes a memory. The memory and the processor are connected by using a circuit or a wire.

According to an eighth aspect, this application provides a computer program product. The computer program product includes a computer program (or may be referred to as instructions or code), and when the computer program is run on a computer, the computer is enabled to perform the method according to the first aspect or the second aspect.

It may be understood that, for beneficial effects of the third aspect to the eighth aspect, refer to the related descriptions in the first aspect or the second aspect. Details are not described herein again.

### BRIEF DESCRIPTION OF DRAWINGS

FIG. 1 is a schematic diagram of an application scenario according to an embodiment of this application;
FIG. 2 is a structural block diagram of an electronic device according to an embodiment of this application;
FIG. 3 is a schematic diagram of interface display of an electronic device according to an embodiment of this application;
FIG. 4a is a schematic diagram of interface display of an electronic device according to an embodiment of this application;
FIG. 4b is a schematic diagram of interface display of an electronic device according to an embodiment of this application;
FIG. 5 is a schematic diagram of interface display of an electronic device according to an embodiment of this application;
FIG. 6 is a schematic diagram of interface display of an electronic device according to an embodiment of this application;
FIG. 7 is a schematic diagram of interface display of an electronic device according to an embodiment of this application;
FIG. 8 is a schematic flowchart of a control method according to an embodiment of this application;
FIG. 9 is a schematic flowchart of another control method according to an embodiment of this application;
FIG. 10 is a schematic flowchart of still another control method according to an embodiment of this application;
FIG. 11 is a schematic diagram of a structure of a chip according to an embodiment of this application; and
FIG. 12 is a schematic diagram of a hardware structure of an electronic device according to an embodiment of this application.

### DESCRIPTION OF EMBODIMENTS

To make the objectives, technical solutions, and advantages of embodiments of this application clearer, the following clearly describes the technical solutions in embodiments of this application with reference to the accompanying drawings in embodiments of this application. Apparently, the described embodiments are merely some but not all of embodiments of this application. All other embodiments obtained by a person of ordinary skill in the art based on embodiments of this application without creative efforts shall fall within the protection scope of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In this specification and the claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In addition, in embodiments of this application, the word "example", "for example", or the like represents giving an example, an illustration, or a description. Any embodiment or design described by "example" or "for example" in embodiments of this application should not be construed as being more preferred or advantageous than another embodiment or design. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

First, technical terms involved in this solution are described.

### (1) Mount

To mount (mount) is to associate a device with a specific location in a directory tree so that an operating system can find the newly added device from a root directory and access file data in the device. The device herein is not limited to a specific device, and may be a real device such as a hard disk drive or an optical disc memory, or may be a directory in an operating system, or may be another virtual device.

For example, when data stored in a USB flash drive (USB flash disk) needs to be accessed, to enable an operating system in a computer to find the USB flash drive, the USB flash drive needs to be mounted to a specific location (for example, /media/usb/) in a directory tree structure in the operating system. It is assumed that the USB flash drive is /dev/usb. When the USB flash drive is inserted into the computer, a corresponding command executed by the computer is as follows: mount/dev/usb/media/usb, that is, to mount the USB flash drive to the /media/usb/ directory. After the preceding commands are executed on the computer, files in the USB flash drive are visible to the operating system of the computer. For example, if a file in the USB flash drive is in /dir/hello.txt, a corresponding path that is accessible for the operating system is as follows: /media/usb/dir/hello.txt.

The following describes the technical solutions in embodiments of this application.

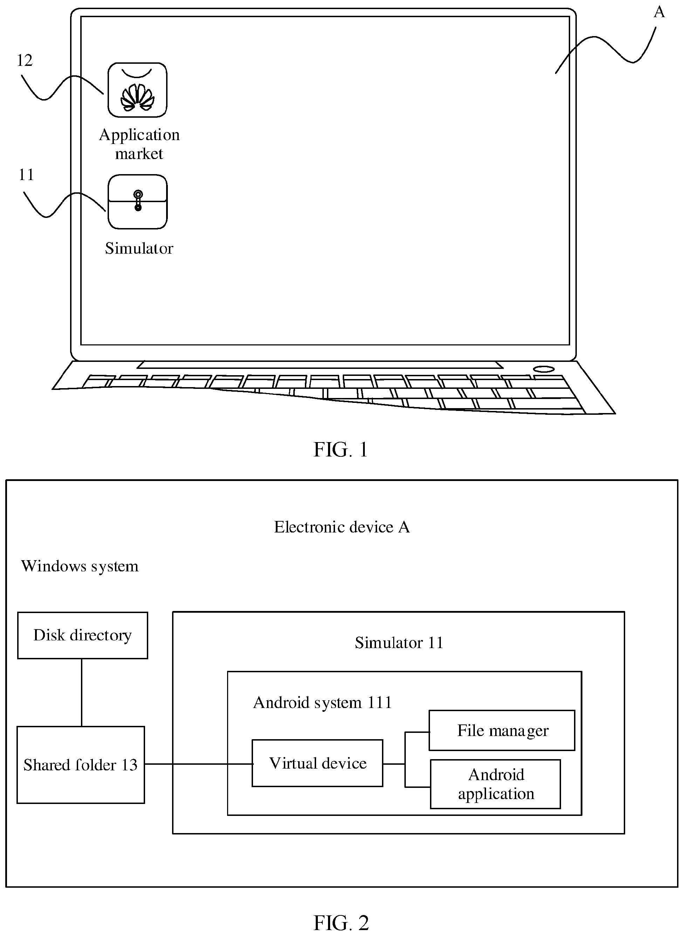

FIG. 1 is a schematic diagram of an application scenario according to an embodiment of this application. As shown in FIG. 1, a simulator 11 and an application market 12 are installed on an electronic device A. The simulator 11 may simulate a running environment of an Android system on the electronic device A, and can run the Android system. The application market 12 may provide an application adapted to a system configured on the electronic device A, and may also provide an application adapted to the Android system. For example, when a system configured on the electronic device A is a Windows system, the application market 12 may provide a Windows application, or may provide an Android application. A suffix of an installation package of the Windows application may be .exe, and a suffix of an Android package of the Android application may be .apk. When a system configured on the electronic device A is an iOS system, the application market 12 may provide an iOS application, or may provide an Android application. An extension of an installation package of the iOS application may be .ipa, and an extension of an Android package of the Android application may be . apk.

In this solution, a user may set a download directory of the Android application in the application market 12. The download directory may be understood as a shared path between a host machine (that is, the system configured on the electronic device A) and a virtual machine (that is, the Android system in the simulator 12). In a running process of the virtual machine in the simulator 12, after the download directory set in the application market 12 is changed, the simulator 12 may reconstruct a virtual device based on a new download directory, and the virtual machine in the simulator 12 may be mounted to the reconstructed virtual device, so that the virtual machine in the simulator 12 can directly access an installation package in the new download directory and install the installation package in the new download directory. In this way, the shared path between the host machine and the virtual machine is modified in real time in a running process of the virtual machine, so that the virtual machine can access data in a modified shared path without restarting the virtual machine, and the application currently used in the virtual machine does not need to be closed, not affecting an application currently used in the virtual machine.

It may be understood that a system configured on the electronic device A may be a Windows system, an iOS system, or another operating system. This may be specifically determined according to an actual situation, and is not limited herein. In addition, the electronic device A may be a mobile terminal, or may be a non-mobile terminal. For example, the mobile terminal may be a tablet computer, a notebook computer, a palmtop computer, an in-vehicle terminal, or the like, and the non-mobile terminal may be a personal computer (personal computer, PC), a television (television, TV), a teller machine, a self-service machine, or the like. This is not specifically limited herein.

Next, based on the scenario shown in FIG. 1, a structure of an electronic device in this solution is described by using an example in which a system configured on the electronic device A is a Windows system.

FIG. 2 is a structural block diagram of an electronic device according to an embodiment of this application. As shown in FIG. 2, the electronic device A may be an electronic device with a Windows system, and a plurality of applications may be installed in the Windows system, for example, a simulator 11 (simulator name.exe). The simulator 11 may be an application carrying an Android system 111, and the Android system 111 may include an Android application and a file manager. For example, the Android application may be an email application, a Huawei video application, or the like. The file manager may be understood as a file management tool. The file manager may be used to manage a file in the Android system 111, for example, view a file, edit a file, delete a file, or move a file.

In this solution, the Android system 111 may be mounted to a virtual device constructed by the simulator 11. After the Android system 111 is mounted to the virtual device, the Android system 111 may access a shared folder 13 in a Windows system in the electronic device A, and the shared folder 13 may be located in a disk directory of the Windows system in the electronic device A. An installation package of an Android application downloaded by the user from the application market of the electronic device A may be stored in the shared folder 13, so that the Android system 111 may obtain the Android application from the shared folder 13 and install the Android application. It may be understood that, in this solution, the shared folder 13 may be set by using the application market of the electronic device A. In addition, the virtual device in the Android system 111 may be understood as a disk, and may be visually understood as a drive C or a drive D in a personal computer, and may provide data storage space for the Android system.

Next, based on the scenario shown in FIG. 1 and the structure of the electronic device shown in FIG. 2, a control method in this solution is described.

### (1) Modify a shared path in the electronic device A

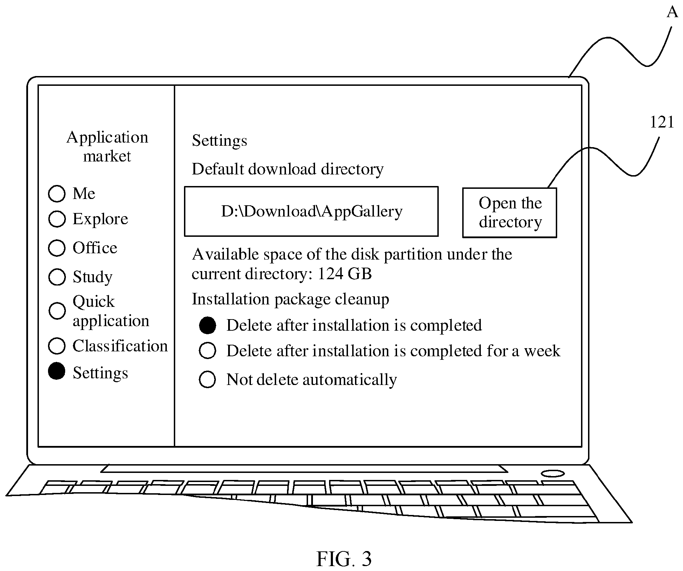

Still refer to FIG. 1. The user may open (for example, double-click or click) the application market 12 on the electronic device A. Then, a display interface of the electronic device A may enter an interface shown in FIG. 3 from the interface shown in FIG. 1. In FIG. 3, a user may view a modification entry 121 of the shared path (that is, a download directory) by using a "Settings" entry in the application market 12. Then, the user may modify the shared path from the modification entry 121. For example, change the download directory from D: Download\AppGallery to E: Download\AppGallery.

### (2) Install an Android application on the electronic device A

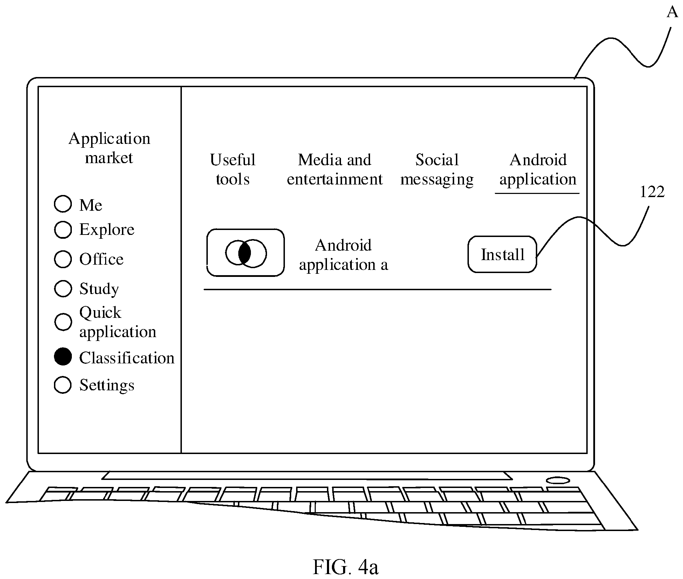

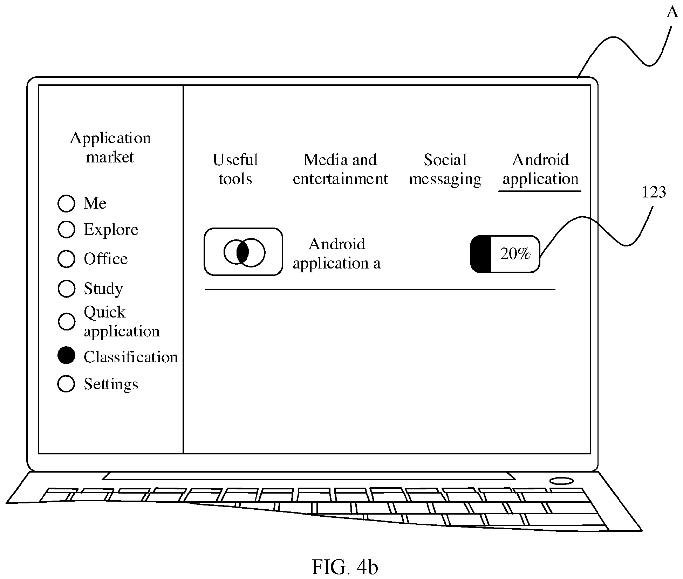

Still refer to FIG. 1. The user may open (for example, double-click or click) the application market 12 on the electronic device A. Then, a display interface of the electronic device A may enter an interface shown in FIG. 4 from the interface shown in FIG. 1. In FIG. 4a, the user may view or search for, by using an entry of "Android application" in the application market 12, Android applications that can be installed. Then, the user may select an Android application a from the Android applications, and select an installation control 122 corresponding to the Android application a. Then, the electronic device A downloads (that is, obtains) the Android application a from the application market 12, and stores an installation package of the Android application a in the shared path (that is, the download directory) in the electronic device A. For example, the Android application a may be stored in the download directory "E: Download\AppGallery". In an example, in a process in which the electronic device A downloads and/or installs the Android application a, as shown in FIG. 4b, an installation control (as shown by 122 in FIG. 4a) corresponding to the Android application a may be updated and displayed as a display control (as shown by 123 in FIG. 4b), so that the user can observe a download and/or installation progress in real time by using the display control 123.

After the electronic device A downloads the Android application a, the application market 12 may send an installation command to the simulator 11 by using inter-process communication (inter-process communication, IPC), and send application name information of the Android application a, and storage path information (that is, shared path information) of the installation package, and the like.

It may be understood that, when the simulator 11 in the electronic device A is not in an enabled state, the electronic device A may control the simulator 11 to be enabled silently. For example, when the simulator 11 is not in the enabled state, the electronic device A may send a background start instruction to the simulator 11, to instruct the simulator 11 to start in the background. Then, after receiving the background start instruction, the simulator 11 may start and run in the background, controlling the simulator 11 to be silently started.

### (3) Use the simulator to check whether a shared path is changed.

After the simulator 11 in the electronic device A receives, through IPC, the installation command sent by the application market 12, the application name information of the Android application a, and the storage path information (that is, the shared path information) of the installation package, the simulator 11 may verify the shared path information, to determine whether a shared path is changed.

In an example, the simulator 11 may record at least a previously received shared path information. Then, after the simulator 11 receives the shared path information currently, the simulator 11 may compare the currently received shared path information with the previously received shared path information, to determine whether a shared path is changed. For example, when the previously received shared path information is "D: Download\AppGallery", and the currently received shared path information is "E: Download\AppGallery", the simulator 11 determines that a shared path is changed by comparing the currently received shared path information with the previously received shared path information.

In an example, the electronic device A may alternatively record modification information of a shared path. In this case, the electronic device A may determine, based on the modification information recorded by the electronic device A, whether a current shared path is changed. When the electronic device A determines that the current shared path is changed, the electronic device A may send, to the simulator 11, a message that indicates that a shared path is changed. Then, after the simulator 11 receives the message that is sent by the electronic device A and that indicates that a shared path is changed, the simulator 11 may learn that a shared path has changed.

It should be noted that, in this solution, when a shared path is changed, the simulator 11 may perform dynamic mounting. When a shared path is not changed, the simulator 11 may not perform dynamic mounting, and send an installation command to the virtual machine (that is, the Android system) in the simulator 11, to instruct the virtual machine in the simulator 11 to install the Android application a.

### (4) Perform dynamic mounting of the simulator

### a. The simulator reconstructs a virtual device.

In this solution, when a shared path is changed, the simulator 11 may destroy the original virtual device, and construct a new virtual device based on a new shared path, that is, perform software initialization of a virtual device. For example, when the simulator 11 constructs a new virtual device, the simulator 11 may apply for memory from the operating system of the electronic device A, and then the simulator 11 sets a corresponding behavior processing function, for example, a required processing function for reading or writing, and use a shared path as a read/write directory of the corresponding behavior processing function. To be specific, reading and writing of the behavior processing function are performed in the shared path. Finally, the behavior processing function is registered in the simulator, that is, a new virtual device that can point to the shared path may be constructed. In this way, when the virtual device is accessed, a file in the shared path may be accessed, and software initialization of the virtual device is completed. For example, the virtual device may be used by the virtual machine in the simulator 11 to access a hard disk drive, that is, a virtual device, in the electronic device A, and may point to a path in the system of the electronic device A, for example, a shared path set by a user. When the virtual device points to the shared path set by the user in the system of the electronic device A, the virtual machine in the simulator 11 may access the shared path by using the virtual device.

After constructing the new virtual device, the simulator 11 may send a mounting command to the virtual machine (that is, the Android system) in the simulator 11 through pipe communication (communication pipeline) or shared memory-based communication, so that the virtual machine is mounted to the new virtual device.

In this solution, the mounting command may include a mounting manner and a mounting parameter. The mounting manner may include direct mounting or first unmounting and then mounting. The mounting parameter may include: a size of a minimum storage unit, an identifier (such as a name) of a virtual device that needs to be mounted, a directory mounted to a virtual machine, or a type of a specified file system. In an example, the minimum storage unit size may be understood as a size of a minimum storage location allocated to a virtual device. In an example, if a device whose name is the same as a name of the newly constructed virtual device exists in a mount list of the virtual machine, it indicates that the newly constructed virtual device is not mounted for the first time. Therefore, to avoid a conflict, a mounting manner may be first unmounting and then mounting, that is, first unmounting the original virtual device, and then mounting the virtual machine to the new virtual device. If a device whose name is the same as the name of the newly constructed virtual device does not exist in the mounting list of the virtual machine, the mounting manner may be direct mounting. In an example, a type of the specified file system may be a 9p file system (plan 9 file system, 9pfs).

In an example, if the virtual machine in the simulator 11 is currently in a sleep state, the simulator 11 may send a wake-up instruction to the virtual machine in the simulator 11, to wake up the virtual machine in the simulator 11.

### b. Mount the virtual machine in the simulator to the new virtual device.

After receiving the mounting command sent by the simulator 11, the virtual machine in the simulator 11 may unmount an original virtual device, and mount the virtual machine to a new virtual device. For example, when it is assuming that the name of the virtual device is virtual_disk, and the directory mounted to the virtual machine is \data\media, the virtual machine correspondingly executes a command mountvirtual_disk\data\media, that is, mounts the new virtual device to the \data\media directory. Then, the virtual machine directly accesses \data\media, and can access the virtual device. Because the virtual device points to the shared path, when the virtual machine accesses the virtual device, the virtual machine can access a file in the shared path. For example, the virtual device may be understood as a file sharing medium between the host machine and the virtual machine.

After the virtual machine is mounted to the new virtual device, the virtual machine may feed back a mounting result to the simulator 11, so that the simulator 11 obtains the feedback result.

### (5) The virtual machine in the simulator installs the Android application.

After learning that the virtual machine in the simulator 11 is successfully mounted to the new virtual device, the simulator 11 may send an installation command and application name information of the Android application a to the virtual machine.

Then, after receiving the installation command sent by the simulator 11, the virtual machine may access the virtual device based on the application name information of the Android application a, to access the installation package of the Android application a from the shared path pointed to by the virtual device. Then, the Android application a may be installed on the virtual machine. After the virtual machine successfully installs the Android application a, an installation result may be fed back to the simulator 11, so that the simulator obtains the installation result.

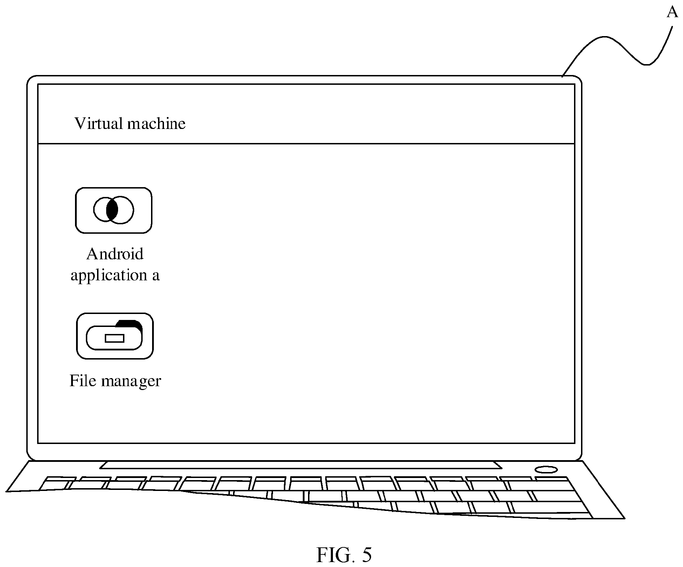

In addition, after the Android application a is successfully installed on the virtual machine, as shown in FIG. 5, a shortcut icon of the Android application a may be displayed on the virtual machine, so that the user can perform an operation such as starting or uninstalling the Android application a on the virtual machine.

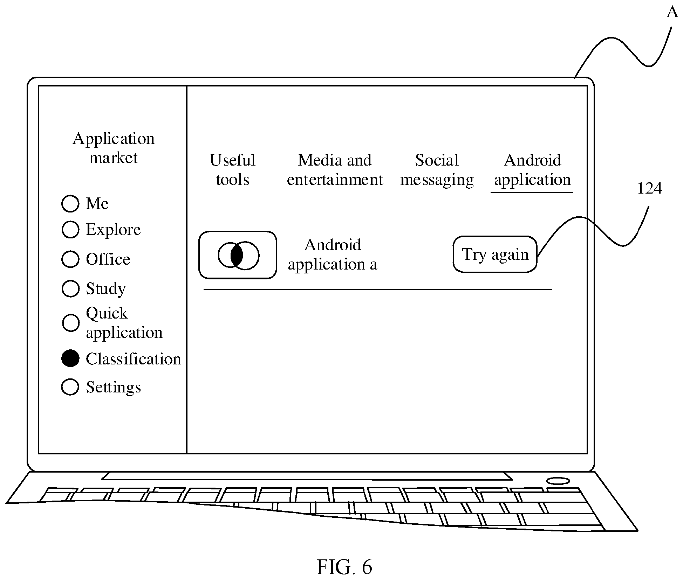

It may be understood that, after learning that mounting the virtual machine in the simulator 11 is failed, the simulator 11 may present failure information to the user, so that the user obtains a result indicating mounting is failed, and the user selects whether to perform mounting again. For example, as shown in FIG. 6, after mounting is failed, the installation control (as shown in 122 in FIG. 4a) corresponding to the Android application a may be updated and displayed as a "Try again" control (as shown in 124 in FIG. 6). Then, after the user taps the "Try again" control 124, mounting may be performed again.

### (6) The application market displays the installation result.

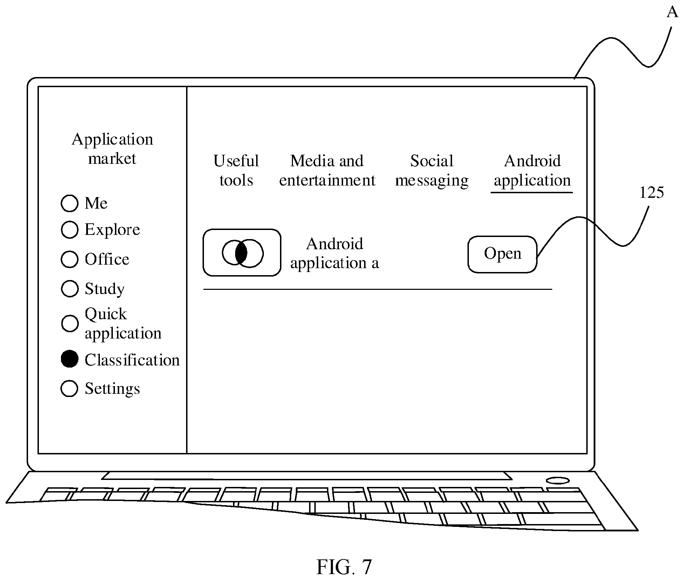

After obtaining the installation result, the simulator 11 may send the installation result to the application market 12 through IPC. Then, the application market 12 may display an installation result indicating, for example, installation is successful or failed. For example, as shown in FIG. 7, after installation is successful, an installation control (as shown by 122 in FIG. 4a) corresponding to the Android application a may be updated and displayed as an enable control or an open control (as shown by 125 in FIG. 7). The Android application is installed.

It may be understood that, if the simulator 11 in the electronic device A is in a disabled state when the Android application is installed, after installation of the Android application is completed, a status of the simulator 11 may be restored to the disabled state (that is, an initial state). In addition, in addition to being applicable to Android application installation, the foregoing solution is also applicable to Android application update. A process of updating the Android application is the same as a process of installing the Android application, and details are not described herein again.

It should be noted that the foregoing (1), (2), (3), (4), (5), and (6) do not constitute a limitation on an execution sequence of each procedure in this solution, and a sequence may be selectively changed between the foregoing (1), (2), (3), (4), (5), and (6).

Therefore, in a running process of the virtual machine in the simulator, when the download directory that is set in the application market of the electronic device is changed, the simulator may reconstruct the virtual device based on the new download directory, and the virtual machine in the simulator may be mounted to the reconstructed virtual device, so that the virtual machine in the simulator may directly access the installation package in the new download directory and install the installation package in the new download directory. In this way, the shared path between the host machine and the virtual machine is modified in real time in the running process of the virtual machine without a need of restarting the virtual machine, so that an application that is currently used and that is in the virtual machine does not need to be closed, and the application currently used in the virtual machine is not affected.

For ease of understanding, the following describes a control method provided in this solution by using an example.

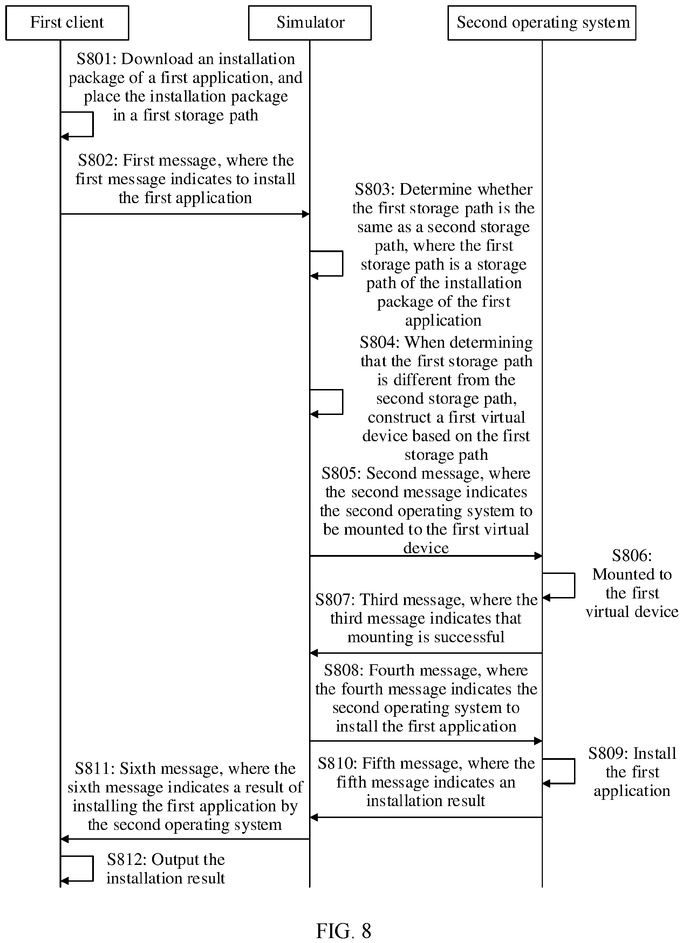

For example, FIG. 8 is a schematic flowchart of a control method according to an embodiment of this application. Both a first client and a simulator in FIG. 8 may be installed on an electronic device, the electronic device includes a first operating system, the simulator includes a second operating system, and the first operating system is different from the second operating system. For example, the first operating system may be a Windows operating system, and the second operating system may be an Android operating system. For example, the first client may be a client having an application providing function, for example, an application market. The application market may provide an application adapted to the second operating system, for example, may provide an Android application. The second operating system may be referred to as a virtual machine. FIG. 8 describes a process of installing an application in the second operating system by using the first client.

As shown in FIG. 8, the control method may include the following steps.

S801: In response to an installation operation performed by a user for a first application on the first client, the first client downloads an installation package of the first application, and places the installation package in a first storage path.

Specifically, the user may download the first application on the first client, and the first client may include a default download path, that is, the first storage path. In addition, before the user downloads the first application, the user may alternatively change the first download path. The installation package of the first application may be stored in the first storage path. For example, the installation operation may be an operation of installing an application, or may be an operation of updating an application. This is not limited herein. For example, the first application may be an Android application. For example, the first download path may be understood as a shared path.

S802: The first client sends a first message to the simulator, where the first message indicates to install the first application.

Specifically, after downloading is completed, the first client may send, to the simulator through IPC, the first message that the application indicates the simulator to install the first application, so that the simulator installs the first application. For example, the first message may include one or more of the following: a name of the first application, the first storage path, or information about whether a second storage path is modified.

S803: The simulator determines whether the first storage path is the same as the second storage path, where the first storage path is a storage path of the installation package of the first application.

Specifically, the simulator may check the first storage path (that is, the shared path) of the installation package of the first application, to determine whether the first storage path is the same as the second storage path, to determine whether the shared path is changed. The second storage path may be a storage path of a previously installed application, or may be the default storage path on the first client.

For example, the simulator may compare the first storage path with storage path information (that is, shared path information) recorded by the simulator, to determine whether the shared path is changed. In addition, the first client may alternatively send the information about whether the second storage path is modified to the simulator, so that the simulator can determine whether the shared path is changed.

S804: When the simulator determines that the first storage path is different from the second storage path, the simulator constructs a first virtual device based on the first storage path.

Specifically, when the simulator determines that the first storage path is different from the second storage path (that is, the shared path is changed), the simulator may construct the first virtual device based on the first storage path. For example, when constructing the first virtual device, the simulator may apply for memory from the first operating system of the electronic device, and then the simulator sets a corresponding behavior processing function, for example, a required processing function for reading or writing, and uses the first storage path as a read/write directory of the corresponding behavior processing function. To be specific, reading and writing of the behavior processing function both are performed in the first storage path. Finally, the behavior processing function is registered in the simulator, that is, the first virtual device that can point to the first storage path may be constructed. When the second operating system in the simulator accesses the first virtual device, the first storage path may be accessed.

In an example, before constructing the first virtual device, the simulator may first destroy a second virtual device constructed based on the second storage path.

S805: The simulator sends a second message to the second operating system, where the second message indicates the second operating system to be mounted to the first virtual device.

Specifically, after constructing the first virtual device, the simulator may send, to the second operating system through pipe communication, the second message that indicates the second operating system to be mounted to the first virtual device, so that the second operating system is mounted to the first virtual device.

For example, the second message may include a mounting manner and a mounting parameter. The mounting manner includes direct mounting or first unmounting and then mounting. The mounting parameter includes one or more of the following: a name of the first virtual device, a directory mounted to the second operating system, or a type of a specified file system.

S806: The second operating system is mounted to the first virtual device.

Specifically, the second operating system may be mounted to the first virtual device based on the mounting manner and the mounting parameter that are included in the second message. For a detailed mounting process, refer to the foregoing descriptions. Details are not described herein again.

S807: The second operating system sends a third message to the simulator, where the third message indicates that mounting is successful.

Specifically, after the second operating system is successfully mounted to the first virtual device, the second operating system may send, to the simulator through pipe communication, the third message that indicates that mounting is successful. In addition, when mounting is failed, the second operating system may alternatively send, to the simulator through pipe communication, a message that indicates that mounting is failed.

S808: The simulator sends a fourth message to the second operating system in response to the received third message, where the fourth message indicates the second operating system to install the first application.

Specifically, after learning that the second operating system is successfully mounted to the first virtual device, the simulator may send, to the second operating system through pipe communication, the fourth message that indicates the second operating system to install the first application, so that the second operating system installs the first application.

S809: The second operating system installs the first application.

Specifically, the second operating system may access the first virtual device, to access the first storage path, obtain the installation package of the first application stored in the first storage path, and install the first application.

S810: The second operating system sends a fifth message to the simulator, where the fifth message indicates an installation result.

Specifically, the second operating system may send, to the simulator through pipe communication, the fifth message that indicates the installation result. The installation result may include a result indicating that installation is successful or installation is failed.

S811: The simulator sends a sixth message to the first client, where the sixth message indicates a result of installing the first application by the second operating system.

Specifically, after obtaining the result of installing the first application by the second operating system, the simulator may send the sixth message to the first client through IPC, where the sixth message indicates the result of installing the first application by the second operating system.

S812: The first client outputs the installation result.

Specifically, after obtaining the result of installing the first application by the second operating system, the first client may output the installation result. For example, the first client may output the installation result in one or more of a text manner, a graphic manner, a voice manner, a vibration manner, and the like, to present the installation result to the user.

It may be understood that the second message in S805 may further indicate the second operating system to install the first application, that is, after the second operating system is mounted to the first virtual device, the second operating system may install the first application. In this case, after the second operating system is successfully mounted to the first virtual device in S806, S809 may be directly performed, that is, the second operating system directly installs the first application.

It may be understood that, in S803, if it is determined that the shared path is not changed, S808 may be directly performed, that is, the fourth message is directly sent to the second operating system through pipe communication. For detailed descriptions of the foregoing steps, refer to the foregoing related descriptions. Details are not described herein again.

Next, based on the content described above, still another control method provided in an embodiment of this application is described.

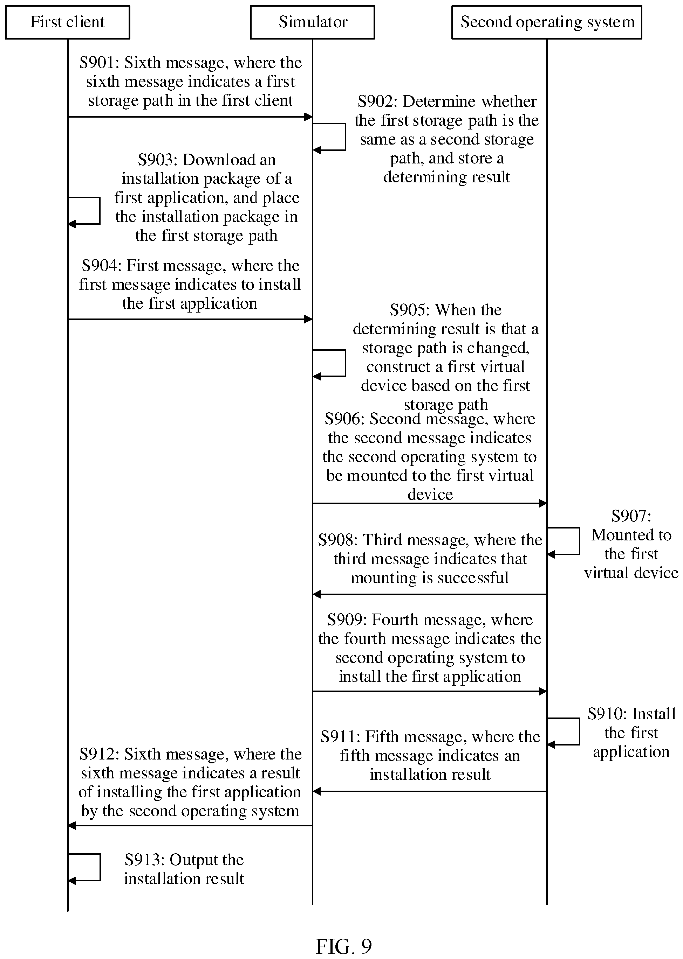

For example, FIG. 9 is a schematic flowchart of another control method according to an embodiment of this application. Both a first client and a simulator in FIG. 9 may be installed on an electronic device, the electronic device includes a first operating system, the simulator includes a second operating system, and the first operating system is different from the second operating system. For example, the first operating system may be a Windows operating system, and the second operating system may be an Android operating system. For example, the first client may be a client having an application providing function, for example, an application market. The application market may provide an application adapted to the second operating system, for example, may provide an Android application. The second operating system may be referred to as a virtual machine. FIG. 9 describes a process of installing an application in the second operating system by using the first client. A difference between FIG. 9 and FIG. 8 lies in that, in FIG. 9, the first client may send, in advance to the simulator, a storage path (that is, a shared path) set by a user or information about whether a storage path is changed, so that the simulator may learn in advance whether a shared path is changed, and during installation of an application, whether to reconstruct a virtual device may be directly determined based on a determining result, avoiding determining whether a shared path is changed during installation and improving installation efficiency.

As shown in FIG. 9, the control method may include the following steps.

S901: The first client sends a sixth message to the simulator, where the sixth message indicates a first storage path in the first client.

Specifically, the first client may periodically send the sixth message to the simulator. The sixth message indicates the first storage path in the first client. In addition, the first client may alternatively send the sixth message to the simulator after a storage path is changed. This is not limited herein. The first storage path may be a default download path, or may be a download path changed by the user, and the first storage path may store an installation package of the first application.

S902: The simulator determines whether the first storage path is the same as a second storage path, and stores a determining result.

Specifically, after receiving the sixth message, the simulator may determine whether the first storage path is the same as the second storage path, to obtain the determining result, and store the determining result. The second storage path is a storage path in which an installation package of an application installed previously is located, or is a storage path that is sent by the first client and that is received by the simulator previously.

S903: In response to an installation operation performed by the user for the first application on the first client, the first client downloads an installation package of the first application, and places the installation package in the first storage path.

Specifically, the user may download the first application on the first client, and the first client may include a default download path, that is, the first storage path. In addition, before the user downloads the first application, the user may alternatively change the first download path. The installation package of the first application may be stored in the first storage path. For example, the installation operation may be an operation of installing an application, or may be an operation of updating an application. This is not limited herein. For example, the first application may be an Android application. For example, the first download path may be understood as a shared path.

S904: The first client sends a first message to the simulator, where the first message indicates to install the first application.

Specifically, after downloading is completed, the first client may send, to the simulator through IPC, the first message that the application indicates the simulator to install the first application, so that the simulator installs the first application. For example, the first message may include one or more of the following: a name of the first application, the first storage path, or information about whether the second storage path is modified.

S905: When the determining result is that a storage path is changed, the simulator constructs a first virtual device based on the first storage path.

Specifically, when the determining result is that a storage path is changed (that is, a shared path is changed), the simulator may construct the first virtual device based on the first storage path. For details, refer to the foregoing descriptions. Details are not described herein again.

S906: The simulator sends a second message to the second operating system, where the second message indicates the second operating system to be mounted to the first virtual device.

Specifically, after constructing the first virtual device, the simulator may send, to the second operating system through pipe communication, the second message that indicates the second operating system to be mounted to the first virtual device, so that the second operating system is mounted to the first virtual device. For example, the second message may include a mounting manner and a mounting parameter. The mounting manner includes direct mounting or first unmounting and then mounting. The mounting parameter includes one or more of the following: a name of the first virtual device, a directory mounted to the second operating system, or a type of a specified file system.

S907: The second operating system is mounted to the first virtual device.

Specifically, the second operating system may be mounted to the first virtual device based on the mounting manner and the mounting parameter that are included in the second message. For a detailed mounting process, refer to the foregoing descriptions. Details are not described herein again.

S908: The second operating system sends a third message to the simulator, where the third message indicates that mounting is successful.

Specifically, after the second operating system is successfully mounted to the first virtual device, the second operating system may send, to the simulator through pipe communication, the third message that indicates that mounting is successful. In addition, when mounting is failed, the second operating system may alternatively send, to the simulator through pipe communication, a message that indicates that mounting is failed.

S909: The simulator sends a fourth message to the second operating system in response to the received third message, where the fourth message indicates the second operating system to install the first application.

Specifically, after learning that the second operating system is successfully mounted to the first virtual device, the simulator may send, to the second operating system through pipe communication, the fourth message that indicates the second operating system to install the first application, so that the second operating system installs the first application.

S910: The second operating system installs the first application.

Specifically, the second operating system may access the first virtual device, to access the first storage path, obtain the installation package of the first application stored in the first storage path, and install the first application.

S911. The second operating system sends a fifth message to the simulator, where the fifth message indicates an installation result.

Specifically, the second operating system may send, to the simulator through pipe communication, the fifth message that indicates the installation result. The installation result may include a result indicating that installation is successful or installation is failed.

S912: The simulator sends a sixth message to the first client, where the sixth message indicates a result of installing the first application by the second operating system.

Specifically, after obtaining the result of installing the first application by the second operating system, the simulator may send the sixth message to the first client through IPC, where the sixth message indicates the result of installing the first application by the second operating system.

S913: The first client outputs the installation result.

Specifically, after obtaining the result of installing the first application by the second operating system, the first client may output the installation result. For example, the first client may output the installation result in one or more of a text manner, a graphic manner, a voice manner, a vibration manner, and the like, to present the installation result to the user.

It may be understood that, in S904, if a determining result is that a shared path is not changed, S908 may be directly performed, that is, the fourth message is directly sent to the virtual machine. For detailed descriptions of the foregoing steps, refer to the foregoing related descriptions. In addition, there may be an interval of preset duration between S902 and S903, or S903 may be performed immediately after S902 is performed. This is not limited herein.

Next, based on the content described above, another control method provided in an embodiment of this application is described.

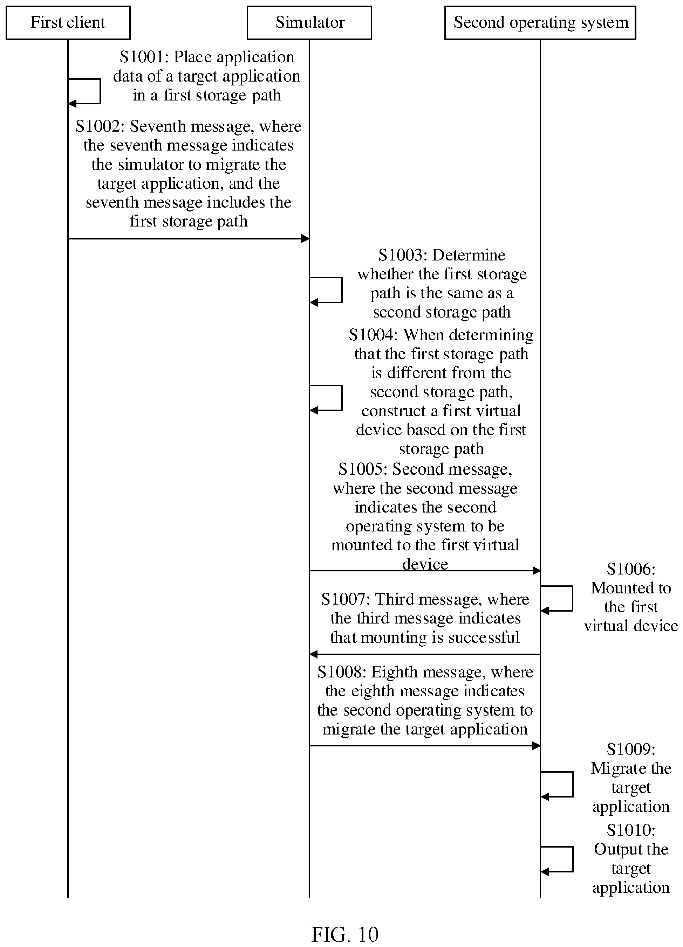

For example, FIG. 10 is a schematic flowchart of still another control method according to an embodiment of this application. Both a first client and a simulator in FIG. 10 may be installed on an electronic device, the electronic device includes a first operating system, the simulator includes a second operating system, and the first operating system is different from the second operating system. In addition, the electronic device may be connected to another electronic device (for example, a mobile phone). For example, the first operating system may be a Windows operating system, and the second operating system may be an Android operating system. For example, the first client may be a client having an application migration function, for example, a mobile phone manager; and the second operating system may be referred to as a virtual machine. FIG. 10 mainly describes a process of migrating, by using a first client, an application (for example, an Android application) on the another electronic device connected to the electronic device to the second operating system.

As shown in FIG. 10, the method may include the following steps.

S1001: In response to a migration operation performed by a user for a target application on the first client, the first client places application data of the target application in a first storage path.

Specifically, after the user establishes a connection between a first electronic device (for example, a mobile phone) used by the user and a second electronic device on which the simulator is installed, the user may perform, on the first client, a migration operation on the target application installed on the first electronic device used by the user. After receiving the migration operation performed by the user to the target application, the first client may write application data of the target application into the first storage path that is preset by the user or set by default in a system on the second electronic device.

S1002: The first client sends a seventh message to the simulator, where the seventh message indicates the simulator to migrate the target application, and the seventh message may include the first storage path.

Specifically, the first client may send, to the simulator, the seventh message that indicates the simulator to migrate the target application. For example, the seventh message may include a name of the target application and the first storage path, or include a name of the target application and a migration identifier used to indicate the first storage path.

S1003: The simulator determines whether the first storage path is the same as a second storage path.

Specifically, the simulator may compare the first storage path with the second storage path, to determine whether the first storage path and the second storage path are the same. The second storage path may be a path that is recorded by the simulator and that is used when application migration is performed previously.

S1004: When the simulator determines that the first storage path is different from the second storage path, the simulator constructs a first virtual device based on the first storage path.

Specifically, when the simulator determines that the first storage path is different from the second storage path (that is, a shared path is changed), the simulator may construct the first virtual device based on the first storage path. For details, refer to the foregoing descriptions. Details are not described herein again.

S1005: The simulator sends a second message to the second operating system, where the second message indicates the second operating system to be mounted to the first virtual device.

Specifically, after constructing the first virtual device, the simulator may send, to the second operating system through pipe communication, the second message that indicates the second operating system to be mounted to the first virtual device, so that the second operating system is mounted to the first virtual device. For example, the second message may include a mounting manner and a mounting parameter. The mounting manner includes direct mounting or first unmounting and then mounting. The mounting parameter includes one or more of the following: a name of the first virtual device, a directory mounted to the second operating system, or a type of a specified file system.

S1006: The second operating system is mounted to the first virtual device.

Specifically, the second operating system may be mounted to the first virtual device based on the mounting manner and the mounting parameter that are included in the second message. For a detailed mounting process, refer to the foregoing descriptions. Details are not described herein again.

S 1007: The second operating system sends a third message to the simulator, where the third message indicates that mounting is successful.

Specifically, after the second operating system is successfully mounted to the first virtual device, the second operating system may send, to the simulator through pipe communication, the third message that indicates that mounting is successful. In addition, when mounting is failed, the second operating system may alternatively send, to the simulator through pipe communication, a message that indicates that mounting is failed.

S1008: The simulator sends an eighth message to the second operating system in response to the received third message, where the eighth message indicates the second operating system to migrate the target application.

Specifically, after learning that the virtual machine is successfully mounted, the simulator may send, to the second operating system, the eighth message that indicates the second operating system to migrate the target application, so that the second operating system migrates the target application.

S 10010: The second operating system migrates the target application.

Specifically, after receiving the eighth message, the second operating system may access the application data of the target application in the first storage path by accessing the first virtual device mounted to the second operating system, and migrate the target application based on the application data of the target application.

S1010: The second operating system outputs the target application.

Specifically, after completing migration of the target application, the second operating system may output the target application, for example, display an icon of the target application, or prompt the user that migration is completed by using a voice. In addition, the second operating system may also feed back a migration result to the simulator, so that the simulator may feed back the migration result to the first client.

For example, after the second operating system completes migration of the target application, the user may enable the target application in the second operating system, and may view, from the target application, historical usage data in the first electronic device that is of the target application, and the like. For example, when the target application is a social application, the user may view, in the target application in the second operating system, a chat record of using the target application on the first electronic device by the user.

It may be understood that, in S 1003, if it is determined that a shared path is not changed, S 1008 may be directly performed, that is, the eighth message is directly sent to the virtual machine. For detailed descriptions of the foregoing steps, refer to the foregoing related descriptions. Details are not described herein again.

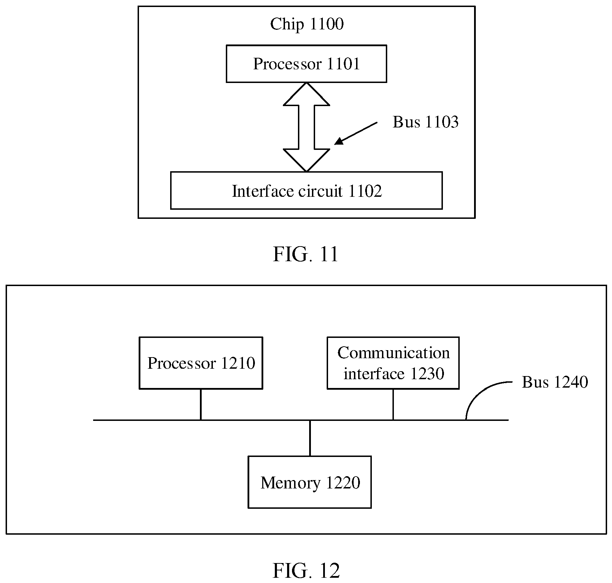

According to the method in the foregoing embodiments, an embodiment of this application further provides a chip. FIG. 11 is a schematic diagram of a structure of a chip according to an embodiment of this application. As shown in FIG. 11, the chip 1100 includes one or more processors 1101 and an interface circuit 1102. Optionally, the chip 1100 may further include a bus 1103. Herein, details are as follows:

The processor 1101 may be an integrated circuit chip and has a signal processing capability. In an implementation process, the steps of the foregoing methods may be completed by using a hardware integrated logic circuit in the processor 1101, or by using instructions in a form of software. The processor 1101 may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like. The interface circuit 1102 may be used to send or receive data, instructions, or information. The processor 1101 may process the data, the instructions, or other information received through the interface circuit 1102, and may send processed information through the interface circuit 1102.

Optionally, the chip further includes a memory. The memory may include a read-only memory and a random access memory, and provide operation instructions and data for the processor. A part of the memory may further include a non-volatile random access memory (NVRAM). Optionally, the memory stores an executable software module or a data structure, and the processor may perform a corresponding operation by invoking operation instructions (the operation instructions may be stored in an operating system) stored in the memory.

Optionally, the interface circuit 1102 may be configured to output an execution result of the processor 1101.

It should be noted that functions corresponding to each of the processor 1101 and the interface circuit 1102 may be implemented by using a hardware design, or may be implemented by using a software design, or may be implemented by using a combination of software and hardware. This is not limited herein.

It should be understood that the steps in the foregoing method embodiments may be completed by using a logic circuit in a form of hardware or instructions in a form of software in the processor. The chip may be applied to the electronic device A, to implement the method performed by the electronic device A provided in embodiments of this application.

FIG. 12 is a schematic diagram of a hardware structure of an electronic device according to an embodiment of this application. The electronic device includes a processor 1210, a memory 1220, a communications interface 1230, and a bus 1240. For example, the electronic device may be the electronic device A shown in FIG. 2.

The processor 1210 may be connected to the memory 1220. The memory 1220 may be configured to store program code and data. Therefore, the memory 1220 may be a storage unit in the processor 1210, an external storage unit independent of the processor 1210, or a component including the storage unit in the processor 1210 and the external storage unit independent of the processor 1210. For example, the processor 1210 may be configured to perform the method provided in embodiments of this application.

Optionally, the electronic device may further include a bus 1240. The memory 1220 and the communications interface 1230 may be connected to the processor 1210 through the bus 1240. The bus 1240 may be a peripheral component interconnect (peripheral component interconnect, PCI) bus, an extended industry standard architecture (extended industry standard architecture, EISA) bus, or the like. The bus 1240 may be categorized into an address bus, a data bus, a control bus, or the like. For ease of indication, the bus is indicated by using only one line in FIG. 12. However, it does not indicate that there is only one bus or only one type of bus.

It should be understood that, in this embodiment of this application, the processor 1210 may be a CPU. The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like. Alternatively, the processor 1210 may be one or more integrated circuits, and is configured to execute a related program, to implement the technical solutions provided in this embodiment of this application.

The memory 1220 may include a read-only memory and a random access memory, and provides instructions and data to the processor 1010. A part of the processor 1210 may further include a non-volatile random access memory. For example, the processor 1010 may further store device type information.

When the electronic device runs, the processor 1210 executes computer-executable instructions in the memory 1220, to perform the operation steps of the foregoing method.

In embodiments of this application, the electronic device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, an address book, word processing software, and instant messaging software.

It may be understood that, the processor in embodiments of this application may be a central processing unit (central processing unit, CPU), may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general purpose processor may be a microprocessor, or may be any conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

## Claims

1. A control method, applied to a simulator, wherein the simulator is configured to be installed on an electronic device, the electronic device comprises a first operating system, and the simulator comprises a second operating system; and the method comprises:
in response to a received first message sent by a first client in the electronic device, determining whether a first storage path is the same as a second storage path, wherein the first message indicates to install a first application, and the first storage path is a storage path of an installation package of the first application;
when the first storage path is different from the second storage path, constructing a first virtual device based on the first storage path; and
sending a second message to the second operating system, wherein the second message indicates the second operating system to be mounted to the first virtual device.

2. The method according to claim 1, wherein the second message further indicates the second operating system to install the first application.

3. The method according to claim 1, wherein the method further comprises:
sending a fourth message to the second operating system in response to a received third message sent by the second operating system, wherein the third message indicates that mounting is successful, and the fourth message indicates the second operating system to install the first application.

4. The method according to any one of claims 1 to 3, wherein the first message comprises one or more of the following:
a name of the first application, the first storage path, or information about whether the second storage path is modified.

5. The method according to any one of claims 1 to 4, wherein the second message comprises a mounting manner and a mounting parameter.

6. The method according to claim 5, wherein the mounting manner comprises direct mounting or first unmounting and then mounting.

7. The method according to claim 5 or 6, wherein the mounting parameter comprises one of the following:
a name of the first virtual device, a directory mounted to the second operating system, or a type of a specified file system.

8. The method according to any one of claims 1 to 7, wherein before the constructing a first virtual device based on the first storage path, the method further comprises:
destroying a second virtual device, wherein the second virtual device is constructed based on the second storage path.

9. The method according to any one of claims 1 to 8, wherein the first client is a client having an application providing function, or the first client is a client having an application migration function.

10. The method according to any one of claims 1 to 9, wherein the first operating system is a Windows operating system, the second operating system is an Android operating system, and the first application is an Android application.

11. The method according to any one of claims 1 to 10, wherein the first virtual device is used by the second operating system to access the first storage path.

12. The method according to any one of claims 1 to 11, wherein the second storage path is a storage path of a second application, and the second application is a previously installed application.

13. A control method, applied to an electronic device, wherein the electronic device comprises a first operating system, a simulator is installed on the electronic device, and the simulator comprises a second operating system; and the method comprises:
in response to an installation operation performed by a user for a first application on a first client in the electronic device, determining whether a first storage path is the same as a second storage path, wherein the first storage path is a storage path of an installation package of the first application;
when the first storage path is different from the second storage path, constructing a first virtual device based on the first storage path, and mounting the second operating system to the first virtual device; and
installing the first application, and displaying the first application.

14. The method according to claim 13, wherein the first client is a client having an application providing function, or the first client is a client having an application migration function.

15. The method according to claim 13 or 14, wherein the first operating system is a Windows operating system, the second operating system is an Android operating system, and the first application is an Android application.

16. The method according to any one of claims 13 to 15, wherein the first virtual device is used by the second operating system to access the first storage path.

17. The method according to any one of claims 13 to 16, wherein before the constructing a first virtual device based on the first storage path, the method further comprises:
destroying a second virtual device, wherein the second virtual device is constructed based on the second storage path.

18. The method according to any one of claims 13 to 17, wherein the second storage path is a storage path of a second application, and the second application is a previously installed application.

19. An electronic device, comprising a processor, wherein the processor is coupled to a memory, and the processor is configured to execute a computer program or instructions stored in the memory, so that the electronic device is enabled to implement the method according to any one of claims 1 to 18.

20. A computer-readable storage medium, wherein the computer-readable storage medium stores a computer program, and when the computer program runs on an electronic device, the electronic device is enabled to perform the method according to any one of claims 1 to 18.

21. A computer program product, wherein the computer program product comprises a computer program, and when the computer program is executed by a computer, the computer is enabled to implement the method according to any one of claims 1 to 18.
